# EUROPÄISCHE PATENTSCHRIFT

(11) **EP 2 688 769 B1**
(45) Veröffentlichungstag und Bekanntmachung des Hinweises auf die Patenterteilung: **06.01.2021**
(21) Anmeldenummer: 12712926.0
(22) Anmeldetag: 07.03.2012
(51) Int. Cl.: B60Q 3/64, B60Q 3/74, G02B 6/00

(54) **FAHRZEUGLEUCHTE ZUR BELEUCHTUNG DES INNENRAUMS DES FAHRZEUGS**
VEHICLE LAMP FOR LIGHTING THE INTERIOR OF THE VEHICLE
LAMPE POUR VÉHICULE DESTINÉE À ÉCLAIRER L'HABITACLE DU VÉHICULE

(30) Priorität: 24.03.2011 DE 102011014923
(43) Veröffentlichungstag der Anmeldung: 29.01.2014
(73) Patentinhaber: Volkswagen Aktiengesellschaft, 38440 Wolfsburg (DE)
(72) Erfinder: KIEL, Henning, 38444 Wolfsburg (DE); SCHELLER, Benjamin, 29356 Bröckel (DE); BRETZ, Janine, 38556 Bokensdorf (DE); STUDENY, Christian, 38440 Wolfsburg (DE)
(86) Internationale Anmeldenummer: PCT/EP2012/001008
(87) Internationale Veröffentlichungsnummer: WO 2012/126575

(56) Entgegenhaltungen:
- WO-A1-2005/063527
- DE-A1- 10 341 739
- DE-A1-102005 025 555
- DE-B3-102005 037 320
- JP-A- 59 011 934

## Beschreibung

Die vorliegende Erfindung betrifft eine Fahrzeugleuchte zur Beleuchtung des Innenraums des Fahrzeugs mit zumindest einer Lichtquelle und einem Lichtleitkörper, der eine Lichteinkoppelfläche aufweist, in welche die Lichtemission der Lichtquelle eingekoppelt wird. Ferner betrifft die Erfindung ein Fahrzeug mit einer solchen Fahrzeugleuchte.

Aus der EP 1 663 712 B1 ist eine Dachhimmelleuchte für ein Fahrzeug bekannt. Die Leuchte umfasst einen Lichtleiter und ein Leuchtmittel, deren Licht in eine Stirnfläche des Lichtleiters eingespeist wird. Der Lichtleiter ist plattenförmig ausgebildet und strahlt Licht flächig in den Innenraum des Fahrzeugs ab. Nachteilig an dieser Leuchte des Standes der Technik ist, dass sie Bauraum seitlich neben der Licht abstrahlenden Fläche benötigt.

Aus der DE 10 2008 008 180 A1 ist eine Innenraumbeleuchtung für ein Kraftfahrzeug bekannt, welche ein Leuchtmittel und einen Lichtleiter umfasst, in den das Leuchtmittel Licht einkoppelt. Der Lichtleiter verläuft im Wesentlichen parallel zu einer Seitenkante eines transparenten plattenförmigen Flächenleuchtelements. An der Stirnfläche des Lichtleiters eingekoppeltes Licht wird seitlich zur Seitenkante des Flächenleuchtelements hin abgestrahlt, wobei das Licht über die Seitenkante in das Flächenleuchtelement eingekoppelt und über seine Abstrahlfläche abgestrahlt wird.

Nachteilig an bekannten Innenraumleuchten eines Fahrzeugs ist es, dass der Betrachter geblendet werden kann, wenn er die leuchtende Fläche der Fahrzeugleuchte direkt betrachtet. Ferner sollen neben Strahlern, die Licht in einem schmalen Öffnungswinkel emittieren, Leuchten bereitgestellt werden, die einen großen Bereich des Innenraums des Fahrzeugs ausleuchten können. Dabei soll vermieden werden, dass der Betrachter Rückschlüsse auf die Position der Lichtquelle innerhalb der Fahrzeugleuchte ziehen kann.

Aus der DE 10 2005 037 320 B3 ist ein beleuchtbarer Schminkspiegel für ein Fahrzeug bekannt. Die auf der Rückseite eines Spiegelelements und einer Spiegelfassung angeordnete Beleuchtungseinrichtung umfasst eine Beleuchtungsquelle in Form einer LED-Anordnung, die in einer Ausnehmung einer Lichtleiterscheibe in diese einstrahlt. Im Bereich eines transparenten Abschnitts der Spiegelfassung wird das Licht mit einer auf der dem Abschnitt abgewandten Seite gelegenen Reflektionsfläche in den Spiegelfassungsabschnitt reflektiert und dann in den Innenraum abgestrahlt.

Aus der WO 2005/963527 A1 ist ein Beleuchtungsmodul bekannt, welches eine punktuelle Lichtquelle, ein zwischen dem Innenraum und der Lichtquelle angeordnetes Maskierelement und ein an den Seiten und an der dem Innenraum zugewandten Seite des Maskierelements verlaufendes Lichtleitmaterial umfasst. Die Lichtemission der Lichtquelle wird in das Lichtleitmaterial eingekoppelt, um das Maskierelement geleitet und als gestreutes Licht in den Innenraum emittiert.

Es ist daher die Aufgabe der vorliegenden Erfindung eine Fahrzeugleuchte der eingangs genannten Art bereitzustellen, mit welcher eine großflächige, homogene Lichtemission bereitgestellt wird und deren lateraler Bauraumbedarf gering ist.

Erfindungsgemäß wird diese Aufgabe durch eine Fahrzeugleuchte mit dem Merkmal des Anspruchs 1 gelöst. Vorteilhafte Ausgestaltungen und Weiterbildungen ergeben sich aus den abhängigen Ansprüchen.

Die erfindungsgemäße Fahrzeugleuchte weist ein flächiges Maskierelement auf, dessen eine Seite in Richtung des Innenraums des Fahrzeugs ausgerichtet ist und dessen andere Seite in die entgegengesetzte Richtung, d.h. zu der dem Innenraum des Fahrzeugs abgewandten Seite, ausgerichtet ist. Die Lichtquelle ist bei der dem Innenraum des Fahrzeugs abgewandten Seite des Maskierelements angeordnet. Der Lichtleitkörper erstreckt sich um das Maskierelement herum, sodass die Lichtemission der Lichtquelle von der dem Innenraum des Fahrzeugs abgewandten Seite zu der dem Innenraum des Fahrzeugs zugewandten Seite geleitet wird und dort ausgekoppelt wird, wobei ein erster Teil der Lichtemission der zumindest einen Lichtquelle zu der dem Innenraum des Fahrzeugs zugewandten Seite des Lichtleitkörpers von einer ersten Seite her gelangt und ein zweiter Teil der Lichtemission der zumindest einen Lichtquelle zu der dem Innenraum des Fahrzeugs zugewandten Seite des Lichtleitkörpers von einer der ersten Seite gegenüberliegenden zweiten Seite her gelangt, wobei der Lichtleitkörper auf der dem Innenraum des Fahrzeugs zugewandten Seite eine Vielzahl von Lichtauskoppelstrukturen aufweist, wobei jede Lichtauskoppelstruktur einen ersten Bereich aufweist, auf den der erste Teil der Lichtemission trifft, und einen zweiten Bereich aufweist, auf den der zweite Teil der Lichtemission trifft, und wobei die mittels des ersten Bereichs erzeugte Lichtauskoppelung eine andere Abstrahlcharakteristik aufweist, als die mittels des zweiten Bereichs erzeugte Lichtauskoppelung.

Durch das Maskierelement der erfindungsgemäßen Fahrzeugleuchte erreicht man, dass der Betrachter, welcher die Fahrzeugleuchte vom Innenraum des Fahrzeugs her betrachtet, die Lichtquelle nicht direkt sehen kann, da sie hinter dem lichtundurchlässigen Maskierelement angeordnet ist. Das Licht der Lichtquelle wird jedoch nach der Einkoppelung in den Lichtleitkörper im Wesentlichen um 180° um das Maskierelement herumgeleitet, sodass mittels des Lichtleitkörpers auf der dem Innenraum des Fahrzeugs zugewandten Seite des Maskierelements ein Flächenstrahler realisiert werden kann, der sehr großflächig und homogen Licht in Richtung des Fahrzeuginnenraums emittiert. Dabei ist der über die Größe der Lichtauskoppelfläche hinaus gehende Bauraum der Fahrzeugleuchte minimal. Es ist nur ein kleiner Bereich seitlich neben dem Maskierelement erforderlich, um das Licht in dem Lichtleitkörper um das Maskierelement herum zu leiten. Außerdem stellt die erfindungsgemäße Fahrzeugleuchte eine sehr große Flexibilität für die Ausgestaltung der Lichteinkoppelung bereit, da diese vollständig von dem Maskierelement verdeckt ist. Die Lichteinkoppelung kann somit sehr einfach an die Bauraumverhältnisse im Innenraum des Fahrzeugs angepasst werden. Unter einem Lichtleitkörper im Sinne der vorliegenden Erfindung wird ein Körper verstanden, in welchem ein über die Lichteinkoppelfläche eintretender Lichtstrahl zumindest einmal durch Totalreflexion reflektiert wird. Bei dem Lichtleitkörper kann es sich somit beispielsweise um einen Lichtleiter handeln.

Gemäß einer Weiterbildung der erfindungsgemäßen Fahrzeugleuchte stellen die Lichtauskoppelstrukturen eine flächige Lichtauskoppelung der Lichtemission der Lichtquelle bereit. Über die Auskoppelstrukturen kann sehr flexibel die gewünschte Abstrahlcharakteristik der flächigen Lichtauskoppelung in dem Innenraum des Fahrzeugs beeinflusst werden. Durch die Auskoppelstruktur kann beispielsweise eine diffuse Lichtemission bereitgestellt werden. Diese Ausgestaltung hat den Vorteil, dass ein Betrachter im Innenraum des Fahrzeugs, welcher die Fahrzeugleuchte direkt betrachtet, nicht geblendet wird. Gleichzeitig kann ein sehr großer Bereich des Innenraums des Fahrzeugs homogen ausgeleuchtet werden.

Unter einer diffusen Lichtabstrahlung wird im Sinne der Erfindung verstanden, dass die Lichtemission nicht gerichtet ist, sondern aufgrund einer Vielzahl von Streuzentren in eine Vielzahl von unterschiedlichen Richtungen erfolgt. Anders als bei Linsenelementen, die parallele, konvergierende oder divergierende Lichtbündel erzeugen, d.h. eine gerichtete Lichtemission, ist die Lichtemission bei der diffusen Lichtabstrahlung nicht gerichtet. Beispielsweise kann ein parallel auftreffendes Lichtbündel gemäß dem Lambertschen Gesetz reflektiert werden oder eine Großwinkelstreuung erzeugt werden.

Gemäß einer Ausgestaltung der erfindungsgemäßen Fahrzeugleuchte ist das Maskierelement von zumindest zwei Seiten von dem Lichtleitkörper umschlossen. Hierdurch wird zum einen erreicht, dass die flächige Lichtemission bei der Auskoppelfläche des Lichtleitkörpers besonders homogen wird, da Licht von zwei Seiten auf die Seite des Lichtleitkörpers gelangt, die auf der dem Innenraum des Fahrzeugs zugewandten Seite des Maskierelements angeordnet ist.

Auf der dem Innenraum des Fahrzeugs abgewandten Seite kann gemäß einer Ausgestaltung der erfindungsgemäßen Fahrzeugleuchte ein optisches Umlenkelement vorgesehen sein, welches die Lichtemission der Lichtquelle so aufteilt, dass sie zu der dem Innenraum des Fahrzeugs zugewandten Seite des Lichtleitkörpers von zwei gegenüberliegenden Seiten gelangt. Durch das optische Umlenkelement erreicht man vorteilhafterweise, dass die Lichtemission einer Lichtquelle aufgeteilt wird und von beiden Seiten her zu der dem Innenraum des Fahrzeugs zugewandten Seite geleitet wird. Hierdurch ist es möglich, nur eine einzige Lichtquelle zu verwenden, trotzdem jedoch Licht von zwei gegenüberliegenden Seiten der dem Innenraum des Fahrzeugs zugewandten Seite zuzuführen.

Alternativ ist es jedoch auch möglich, dass zumindest zwei Lichtquellen vorgesehen sind, wobei die Lichtemission einer Lichtquelle über eine Seite der dem Innenraum des Fahrzeugs zugewandten Seite zugeführt wird und die Lichtemission der anderen Lichtquelle von der anderen Seite her der dem Innenraum des Fahrzeugs zugewandten Seite zugeführt wird.

Gemäß der erfindungsgemäßen Fahrzeugleuchte gelangt ein erster Teil der Lichtemission der zumindest einen Lichtquelle zu der dem Innenraum des Fahrzeugs zugewandten Seite des Lichtleitköpers von einer ersten Seite her und ein zweiter Teil der Lichtemission der zumindest einen Lichtquelle gelangt zu der dem Innenraum des Fahrzeugs zugewandten Seite des Lichtleitkörpers von einer der ersten Seite gegenüberliegenden zweiten Seite her. In diesem Fall weist der Lichtleitkörper auf der dem Innenraum des Fahrzeugs zugewandten Seite eine Vielzahl von Lichtauskoppelstrukturen auf, wobei jede Lichtauskoppelstruktur einen ersten Bereich aufweist, auf den der erste Teil der Lichtemission trifft, und einen zweiten Bereich aufweist, auf den der zweite Teil der Lichtemission trifft. Die mittels des ersten Bereichs erzeugte Lichtauskoppelung weist in diesem Fall eine andere Abstrahlcharakteristik auf, als die mittels des zweiten Bereichs erzeugte Lichtauskoppelung. Da in diesem Fall jede einzelne Lichtauskoppelstruktur der Vielzahl von Lichtauskoppelstrukturen eine Lichtauskoppelung mit unterschiedlichen Abstrahlcharakteristiken bewirkt, kann eine Mehrfachfunktion der Lichtabstrahlung über die gesamte Auskoppelfläche des Lichtleitkörpers bereitgestellt werden. Der Lichtleitkörper ist somit nicht in verschiedene Bereiche unterteilt, die unterschiedliche Abstrahlcharakteristiken bereitstellen. Es werden vielmehr beide Abstrahlcharakteristiken von dem gesamten Lichtleitkörper bereitgestellt. Hierdurch kann die nutzbare Fläche des Lichtleitkörpers erhöht werden, wodurch andererseits der Bauraumbedarf verringert wird.

Die Anordnung der Bereiche, bei denen das Licht in den Lichtleitkörper um das Maskierelement herumgeleitet wird, um zu der dem Innenraum des Fahrzeugs zugewandten Seite zu gelangen, sowie der beiden Bereiche der Lichtauskoppelstrukturen, sind insbesondere so gewählt, dass auf den ersten Bereich nur Lichtstrahlen treffen, die von einer Seite um das Maskierelement herum geleitet werden, und auf den zweiten Bereich nur Lichtstrahlen treffen, die von der anderen Seite um das Maskierelement herum geleitet werden. Auf diese Weise kann eine sehr selektive Lichtauskoppelung erzeugt werden, bei welcher der erste Bereich nur die Abstrahlcharakteristik des von der einen Seite um das Maskierelement herum geleiteten Lichts beeinflusst und der zweite Bereich nur die Abstrahlcharakteristik des Lichts beeinflusst, welches von der anderen Seite um das Maskierelement herum geleitet wurde.

Die Lichtauskoppelstrukturen reflektieren insbesondere das auftreffende Licht, sodass dieses bei einer gegenüberliegenden Lichtauskoppelfläche aus dem Lichtleitkörper austritt. Hierdurch erreicht man vorteilhafterweise, dass die für die Lichtauskoppelung verantwortlichen Strukturen für den Betrachter nicht direkt sichtbar sind. Es kann vielmehr eine glatte Auskoppelfläche bereitgestellt werden, über welche jedoch Licht verschiedener Abstrahlcharakteristiken ausgekoppelt wird.

Gemäß einer Ausgestaltung der erfindungsgemäßen Fahrzeugleuchte ist die Lichtauskoppelstruktur ein Einschnitt oder eine Kerbe. Der Lichtleitkörper weist somit eine Vielzahl von Einschnitten oder Kerben auf. Hierdurch erreicht man, dass der Lichtleitkörper sehr einfach und kostengünstig gefertigt werden kann. Alternativ kann die Lichtauskoppelstruktur auch von einem Vorsprung oder einer Hervorhebung gebildet sein.

Gemäß einer Ausgestaltung der erfindungsgemäßen Fahrzeugleuchte sind die beiden Bereiche der Lichtauskoppelstruktur zwei Flächen, die einen Winkel einschließen. Dabei kann eine der Flächen eben sein. Eine andere Fläche kann gekrümmt sein. Auf diese Weise kann man auf einfache und kostengünstige Weise die unterschiedliche Abstrahlcharakteristik erzeugen.

Gemäß einer weiteren Ausgestaltung der erfindungsgemäßen Fahrzeugleuchte ist die von dem ersten Bereich erzeugte Abstrahlcharakteristik ein gerichtetes Lichtbündel. Das Lichtbündel kann beispielsweise einen Öffnungswinkel von kleiner als 15°, insbesondere kleiner als 10° und bevorzugt kleiner als 5° aufweisen. Hierdurch kann vorteilhafterweise ein Leselicht im Innenraum des Fahrzeugs bereitgestellt werden.

Gemäß einer weiteren Ausgestaltung der erfindungsgemäßen Fahrzeugleuchte ist die von dem zweiten Bereich erzeugte Abstrahlcharakteristik eine diffuse Lichtemission. Hierfür kann beispielsweise die dem zweiten Bereich zugeordnete Fläche der Lichtauskoppelstruktur eine raue Oberfläche besitzen. Durch die diffuse Lichtemission kann vorteilhafterweise ein großer Bereich des Innenraums des Fahrzeugs ausgeleuchtet werden. Ferner kann durch den zweiten Bereich eine sogenannte Ambientebeleuchtung bereitgestellt werden.

Gemäß einer weiteren Ausgestaltung der erfindungsgemäßen Fahrzeugleuchte umfasst die Fahrzeugleuchte zumindest zwei Lichtquellen, wobei die Lichtemission der ersten Lichtquelle zu der dem Innenraum des Fahrzeugs zugewandten Seite des Lichtleitkörpers von der ersten Seite her gelangt und die Lichtemission der zweiten Lichtquelle zu der dem Innenraum des Fahrzeugs zugewandten Seite des Lichtleitkörpers von der zweiten Seite her gelangt. In diesem Fall trifft die Lichtemission der ersten Lichtquelle nur auf den ersten Bereich der Lichtauskoppelstrukturen und die Lichtemission der zweiten Lichtquelle trifft nur auf den zweiten Bereich der Lichtauskoppelstrukturen. Werden in diesem Fall unterschiedliche Lichtquellen eingesetzt, kann die jeweilige Abstrahlcharakteristik, die von der Lichtemission nur einer der Lichtquellen herrührt, durch die Charakteristik, wie z.B. die Farbe, des Lichts dieser Lichtquelle beeinflusst werden. Von der Fahrzeugleuchte können auf diese Weise verschiedene Lichtfunktionen bereitgestellt werden, beispielsweise eine Ambientebeleuchtung in einer Farbe und eine Ausleuchtung des Innenraums des Fahrzeugs in einer anderen Farbe, d.h. insbesondere in Weiß. Dabei können die Lichtfunktionen separat voneinander angesteuert werden. Sie können jedoch auch gemeinsam betrieben werden.

Die Lichteinkoppelfläche auf der dem Innenraum des Fahrzeugs abgewandten Seite des Lichtleitkörpers kann beispielsweise durch eine Rinne in dem Lichtleitkörper gebildet sein. Bei dieser Rinne können mehrere Lichtquellen beabstandet voneinander angeordnet sein. Vorteilhafterweise erreicht man hierdurch auf platzsparende Weise eine homogene Lichteinkoppelung. Es wäre jedoch auch möglich, dass die Lichteinkoppelfläche bei einer zentralen Aussparung in dem Lichtleitkörper auf der dem Innenraum des Fahrzeugs abgewandten Seite gebildet ist. In diesem Fall wäre es ausreichend nur eine einzige Lichtquelle bei dieser Aussparung vorzusehen. Außerdem wäre es in diesem Fall, jedoch auch in den vorstehend beschriebenen Ausgestaltungen, möglich, dass der Lichtleitkörper das Maskierelement von mehr als zwei Seiten umschließt, beispielsweise bei dem gesamten Umfang des Maskierelements umschließt.

Der Lichtleitkörper ist erfindungsgemäß aus zwei aneinandergefügten Platten gebildet. Zwischen diesen Platten ist das Maskierelement angeordnet. Insbesondere wird bei der Verbindung der beiden Platten das eingekoppelte Licht um das Maskierelement herum geleitet. Diese Ausgestaltung erlaubt eine besonders kostengünstige Herstellung der Fahrzeugleuchte. Dabei ist die erste Platte auf der dem Innenraum des Fahrzeugs abgewandten Seite des Maskierelements und die zweite Platte auf der dem Innenraum des Fahrzeugs zugewandten Seite des Maskierelements angeordnet. Die zweite Platte weist Auskoppelstrukturen auf, die so ausgebildet sind, dass das der zweiten Platte zugeführte Licht über die gesamte Fläche der zweiten Platte homogen ausgekoppelt wird.

Erfindungsgemäß wird ferner ein Fahrzeug mit einer Fahrzeugleuchte bereitgestellt, wie sie vorstehend beschrieben wurde. Die Fahrzeugleuchte stellt insbesondere eine Decken- oder Himmelbeleuchtung für den Innenraum des Fahrzeugs bereit.

Die Erfindung wird nun anhand von Ausführungsbeispielen mit Bezug zu den Zeichnungen erläutert.
- Figur 1: zeigt schematisch ein Fahrzeug mit einem Ausführungsbeispiel der erfindungsgemäßen Fahrzeugleuchte,
- Figur 2: zeigt einen Schnitt durch ein Ausführungsbeispiel der erfindungsgemäßen Fahrzeugleuchte,
- Figur 3: zeigt eine alternative Ausgestaltung der Lichteinkoppelung,
- Figur 4: zeigt einen Schnitt durch einen Teil des Lichtleitkörpers eines Ausführungsbeispiels der erfindungsgemäßen Fahrzeugleuchte mit dem Strahlengang, der von einer Seite zugeführt wird,
- Figur 5: zeigt einen Schnitt durch das in Figur 4 gezeigte Ausführungsbeispiel mit dem Strahlengang, der von der anderen Seite zugeführt wird und,
- Figur 6: zeigt eine Detailansicht der Figur 4.

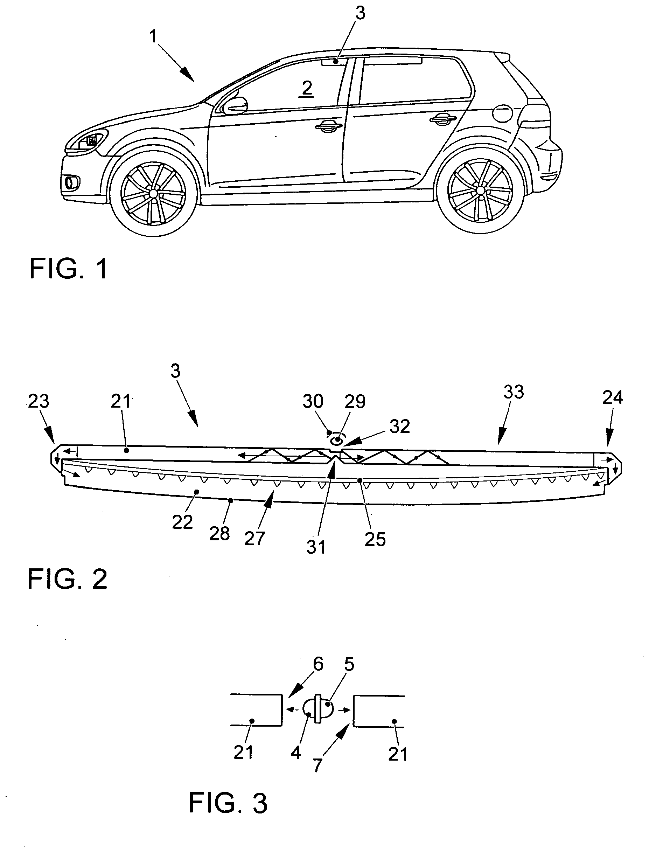

In Figur 1 ist ein Fahrzeug 1 dargestellt, bei welchem ein Ausführungsbeispiel der erfindungsgemäßen Fahrzeugleuchte 3 im Bereich der Decke bzw. des Dachhimmels im Innenraum 2 des Fahrzeugs 1 angeordnet ist. Die Fahrzeugleuchte 3 dient insbesondere als Flächenleuchte zur Ausleuchtung des Innenraums des Fahrzeugs. Ferner können von der Fahrzeugleuchte 3 noch weitere Lichtfunktionen bereitgestellt werden, wie es später erläutert wird.

In Figur 2 ist ein Schnitt durch die Fahrzeugleuchte 3 gezeigt. Bei dem in Figur 1 gezeigten Einbau der Fahrzeugleuchte 3 an das Fahrzeug 1 verläuft dieser Schnitt vertikal durch das Fahrzeug 1. Betrachtet man bei diesem Einbau die Fahrzeugleuchte 3 von unten vom Innenraum 2 des Fahrzeugs aus, ergibt sich ein flächiges Erscheinungsbild. Die Fläche kann beispielsweise quadratisch, rechteckig oder rund, insbesondere elliptisch oder kreisförmig sein. Die Fahrzeugleuchte ist jedoch nicht auf diese Formen beschränkt; beliebige andere Formen können insbesondere in Abhängigkeit von der Innenraumgestaltung des Fahrzeugs 1 gewählt werden.

Die Fahrzeugleuchte 3 umfasst zumindest eine Lichtquelle 29. In dem in Figur 2 gezeigten Ausführungsbeispiel umfasst die Fahrzeugleuchte 3 eine Vielzahl von Lichtquellen 29, welche sich linear senkrecht zu dem in Figur 2 gezeigten Schnitt erstrecken. Bei den Lichtquellen 29 handelt es sich insbesondere um lichtemittierende Dioden. Die Verwendung von lichtemittierenden Dioden hat den Vorteil, dass diese Lichtquellen einen sehr geringen Bauraumbedarf und eine hohe Lebensdauer haben.

Die Fahrzeugleuchte 3 umfasst ferner einen Lichtleitkörper 33, der eine erste Platte 21, eine zweite Platte 22 und die Abschnitte 23 und 24 aufweist, welche die beiden Platten 21 und 22 miteinander verbinden. Der Lichtleitkörper 33 weist bei der Platte 21 eine Lichteinkoppelfläche 32 auf, über welche die Lichtemission der Lichtquellen 29 in die Platte 21 des Lichtleitkörpers 33 eingekoppelt wird. Um einen möglichst großen Anteil der Lichtemission der Lichtquelle 29 in die Platte 21 einzukoppeln, kann ein Reflektor 30 oder Reflektoren 30 vorgesehen sein, welche Lichtstrahlen, die von den Lichtquellen 29 emittiert werden und die nicht in Richtung der Lichteinkoppelfläche 32 gerichtet sind, so reflektieren, dass sie über die Lichteinkoppelfläche 32 in die Platte 21 eingekoppelt werden.

Gegenüberliegend von der Lichteinkoppelfläche 32 ist ein optisches Umlenkelement 31 ausgebildet, welches bewirkt, dass ein Teil der Lichtemission, die über die Lichteinkoppelfläche 32 eingekoppelt wurde, in Richtung des linken Abschnitts 23 geleitet wird und ein anderer Teil in Richtung des rechten Abschnitts 24 geleitet wird. Bei dem optischen Umlenkelement kann es sich beispielsweise um ein Umlenkprisma handeln, welches beispielsweise durch eine dreieckige Einkerbung in der Platte 21 gebildet ist.

Die erste Platte 21 des Lichtleitkörpers 33 ist als Lichtleiter ausgebildet, sodass die über die Lichteinkoppelfläche 32 eingekoppelten Lichtstrahlen durch Totalreflexion zu den Abschnitten 23 bzw. 24 geleitet werden. Bei den Abschnitten 23 bzw. 24 wird die Lichtausbreitung im Wesentlichen um 180° umgelenkt, sodass sie zu der zweiten Platte 22 gelangt, die auch als Lichtleiter ausgebildet ist. Um die Lichtstrahlen bei den Abschnitten 23 und 24 umzulenken, können diese ggf. bei der Oberfläche eine reflektierende Beschichtung aufweisen.

Die Fahrzeugleuchte weist des Weiteren ein flächiges Maskierelement 25 auf. Beim Einbau der Fahrzeugleuchte 3 in dem Fahrzeug 1 ist dieses Maskierelement so ausgerichtet, dass eine Seite des Maskierelements 25 in Richtung des Innenraums des Fahrzeugs zeigt und die andere Seite in die entgegengesetzte Richtung zeigt. Ist die Fahrzeugleuchte 3 wie in Figur 1 gezeigt horizontal ausgerichtet als Deckenleuchte eingebaut, ist das Maskierelement 25 im Wesentlichen horizontal ausgerichtet.

Das Maskierelement 25 ist zwischen den beiden Platten 21 und 22 des Lichtleitkörpers 33 angeordnet, wobei die Abschnitte 23 und 24 des Lichtleitkörpers 33 das Maskierelement 25 zumindest von zwei Seiten her umschließen. Die erste Platte 21 des Lichtleitelements 33 ist somit auf der dem Innenraum 2 des Fahrzeugs 1 abgewandten Seite des Maskierelements 25 angeordnet; die Platte 22 des Lichtleitkörpers 23 ist hingegen auf der dem Innenraum 2 des Fahrzeugs 1 zugewandten Seite des Maskierelements 25 angeordnet. Der Lichtleitkörper 33 erstreckt sich somit bei den Abschnitten 23 und 24 um das Maskierelement 25 herum, sodass die Lichtemission der Lichtquellen 29 über die Lichteinkoppelfläche 32 in den Lichtleitkörper 33 eingekoppelt wird und dann von der dem Innenraum 2 des Fahrzeugs 1 abgewandten Seite zu der dem Innenraum 2 des Fahrzeugs 1 zugewandten Seite geleitet wird. Auf dieser Seite wird die Lichtemission dann ausgekoppelt wie es im Folgenden erläutert wird:

Die zweite Platte 22 weist Auskoppelstrukturen 27 auf, die so ausgebildet sind, dass das über die Abschnitte 23 und 24 der zweiten Platte 22 zugeführte Licht über die gesamte Fläche der zweiten Platte 22 homogen ausgekoppelt wird. In dem in Figur 2 gezeigten Ausführungsbeispiel sind die Auskoppelstrukturen 27 auf der zu dem Maskierelement 25 benachbarten Seite der zweiten Platte 22 angeordnet. Die Lichtauskoppelstrukturen reflektieren die Lichtstrahlen in der zweiten Platte 22, sodass sie auf der gegenüberliegenden Auskoppelfläche 28 der zweiten Platte 22 in den Innenraum 2 des Fahrzeugs 1 abgestrahlt werden. Die Auskoppelstrukturen 27 oder die Auskoppelfläche 28 können raue Flächen umfassen, um eine diffuse Lichtemission in den Innenraum des Fahrzeugs 1 zu erzeugen.

Das Maskierelement 25 ist lichtundurchlässig. Vom Innenraum 2 des Fahrzeugs 1 aus sieht der Betrachter somit nur die zweite Platte 22 des Lichtleitkörpers 33. Die erste Platte 21 und insbesondere die Lichtquellen 29 sind durch das Maskierelement 25 verdeckt, sodass sie für den Betrachter nicht sichtbar sind.

Bei einem weiteren Ausführungsbeispiel der erfindungsgemäßen Fahrzeugleuchte erfolgt die Lichtemission, die in den Lichtleitkörper 33 eingekoppelt wird, nicht über die beabstandet zueinander angeordneten Lichtquellen 29, sondern über einen einzige zentrale Lichtquelle, deren Licht über die Lichteinkoppelfläche 33 des Lichtleitkörpers 33 bei der ersten Platte 21 eingekoppelt wird. Auch in diesem Fall kann es sich bei der Lichtquelle um eine lichtemittierende Diode, insbesondere um eine sogenannte Hochleistungsleuchtdiode handeln. Die weiteren Merkmale dieses Ausführungsbeispiels entsprechen dem vorstehend beschriebenen Ausführungsbeispiel.

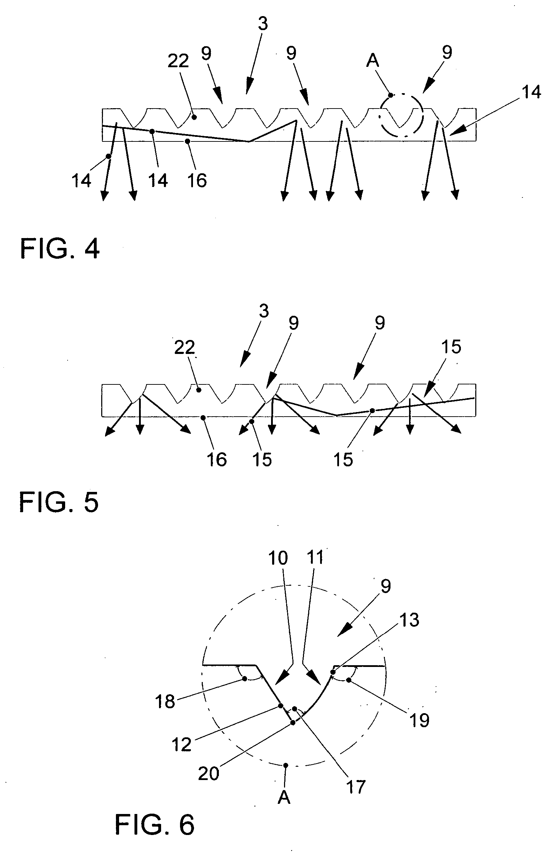

Die Lichteinkoppelung noch eines weiteren Ausführungsbeispiels ist in Figur 3 gezeigt. In diesem Fall sind zwei Lichtquellen 4 und 5, insbesondere zwei Leuchtdioden, vorgesehen. Das Licht der ersten Lichtquelle 4 wird über die Lichteinkoppelfläche 6 in die linke Seite der ersten Platte 21 eingekoppelt; die Lichtemission der zweiten Lichtquelle 5 wird über die Lichteinkoppelfläche 7 der rechten Seite der ersten Platte 21 eingekoppelt. In diesem Fall kann eine spezielle Ausgestaltung der Lichtauskoppelstrukturen bei der zweiten Platte 22 des Lichtleitkörpers 33 gewählt werden, wie es im Folgenden mit Bezug zu den Figuren 4 bis 6 erläutert wird:
Zur Auskoppelung des Lichts bei der zweiten Platte 22 des Lichtleitkörpers 33 ist eine Vielzahl von Lichtauskoppelstrukturen 9 vorgesehen. Eine Lichtauskoppelstruktur 9 ist in der Detailansicht A der Figur 6 dargestellt. Die Lichtauskoppelstruktur 9 ist in diesem Fall von einem Einschnitt bzw. einer Kerbe gebildet. Die Kerbe weist einen ersten Bereich 10 auf, auf den nur Licht auftritt, das ursprünglich von der Lichtquelle 4 emittiert wurde. Ferner weist die Kerbe einen zweiten Bereich 11 auf, auf den nur Licht trifft, welches von der Lichtquelle 5 emittiert wurde. Der Lichtweg 14 der von der Lichtquelle 4 emittierten Lichtstrahlen, die über die erste Lichteinkoppelfläche 6 in den Lichtleitkörper 33 eingekoppelt werden und die auf den ersten Bereich 10 der Lichtauskoppelstrukturen 9 auftreffen, ist in Figur 4 gezeigt. Der Lichtweg 15 der von der Lichtquelle 5 emittierten Lichtstrahlen, die über die zweite Lichteinkoppelfläche 7 in den Lichtleitkörper 33 eingekoppelt werden und die auf den zweiten Bereich 11 der Lichtauskoppelstrukturen 9 auftreffen, ist in Figur 5 gezeigt.

Bei dem ersten Bereich 10 der Lichtauskoppelstrukturen 9 ist eine ebene Fläche gebildet, welche den Winkel 18 mit einer Oberfläche der zweiten Platte 22 des Lichtleitkörpers 33 einschließt. Bei dieser Fläche 12 werden die auftreffenden Lichtstrahlen reflektiert. Hierfür kann die Fläche 12 ggf. mit einer entsprechenden Beschichtung versehen sein. Nach der Reflektion an der Fläche 12 gelangen die Lichtstrahlen zu der gegenüberliegenden Auskoppelfläche 16 der zweiten Platte 22 des Lichtleitkörpers 33, bei welcher sie aus der zweiten Platte 22 des Lichtleitkörpers 33 austreten.

Bei dem zweiten Bereich 11 der Lichtauskoppelstrukturen 9 ist auch eine Fläche 13 gebildet, die jedoch gekrümmt ist. Sie schließt einen Winkel 19 mit der Oberfläche der zweiten Platte 22 des Lichtleitkörpers 33 ein. Bei den Winkeln 18 und 19 handelt es sich insbesondere um stumpfe Winkel. Die gekrümmte Fläche 13 trifft bei einer Verbindungslinie 20 auf das Ende der ebenen Fläche 12. Die beiden Flächen schließen den spitzen Winkel 17 ein. Das auf die Fläche 13 vom Inneren der zweiten Platte 22 des Lichtleitkörpers 33 auftreffende Licht wird auch reflektiert. Hierzu kann auch die Fläche 13 mit einer entsprechenden Beschichtung versehen sein. Nach der Reflexion an der Fläche 13 tritt das Licht bei der gegenüberliegenden Auskoppelfläche 16 aus dem Lichtleitkörper 33 aus.

Die Fläche 12 ist relativ zu der ersten Lichteinkoppelfläche 6 und der Lichtquelle 4 so angeordnet und ausgerichtet, dass die Abstrahlcharakteristik des bei dieser Fläche 12 reflektierten Lichts beim Austritt aus der Auskoppelfläche 16 einen sehr kleinen Öffnungswinkel besitzt, der z.B. in einem Bereich zwischen 15° und 5° liegt. Es wird somit ein Spot bereitgestellt, welcher als Leselicht dient.

Im Gegensatz hierzu ist die Anordnung und Krümmung der Fläche 13 relativ zu der zweiten Lichteinkoppelfläche 7 und der Lichtquelle 5 so ausgebildet und angeordnet, dass eine andere Abstrahlcharakteristik erzeugt wird, nämlich eine Lichtemission mit einem sehr großen Öffnungswinkel. Der Öffnungswinkel ist insbesondere größer als 50°, bevorzugt größer als 60°. Die verschiedenen Abstrahlcharakteristiken sind in den Figuren 4 und 5 gezeigt. Des Weiteren kann die Fläche 13 rau ausgebildet sein, sodass eine Vielzahl von Streuzentren bereitgestellt wird, sodass bei der Reflektion an dieser Fläche 13 eine diffuse Abstrahlcharakteristik erzeugt wird. Es wird somit insbesondere keine gerichtete Lichtemission erzeugt.

Die Lichtquellen 4 und 5 können getrennt beispielsweise über einen Kippschalter angesteuert werden, sodass nur eine der beiden Lichtquellen 4 und 5 eingeschaltet ist oder beide Lichtquellen 4 und 5 gemeinsam eingeschaltet sind. Dabei ergibt sich, dass auch wenn nur eine der Lichtquellen 4 und 5 eingeschaltet ist, jeweils die gesamte Auskoppelfläche 16 für die Lichtabstrahlung der Fahrzeugleuchte genutzt wird. Wenn beide Lichtquellen 4, 5 eingeschaltet sind, wird die Auskoppelfläche 16 gemeinsam für die beiden Lichtemissionen mit den verschiedenen Abstrahlcharakteristiken genutzt. Jede Auskoppelstruktur 9 kann somit zu einer Lichtauskoppelung der Lichtemission der Lichtquelle 4 und der Lichtemission der Lichtquelle 5 beitragen.

Durch die Wahl der Lichtquellen 4 und 5 kann bei diesem Ausführungsbeispiel z.B. die Farbe der Lichtemissionen mit den verschiedenen Abstrahlcharakteristiken beeinflusst werden. Beispielsweise können die Lichtquellen 4 und 5 verschiedenfarbiges Licht emittieren.

Des Weiteren ist es möglich, dass statt der Lichtquellen 4 und 5 die Lichtquellen 29 des zuerst beschriebenen Ausführungsbeispiels verwendet werden, wobei das von diesen Lichtquellen 29 eingekoppelte Licht wie beschrieben über das optische Umlenkelement 31 auf die beiden Seiten der ersten Platte 21 aufgeteilt wird. In diesem Fall wird der Anteil der eingekoppelten Lichtemission, der über den Abschnitt 23 um das Maskierelement 25 herum geleitet wird, über dem ersten Bereich 10 der Auskoppelstrukturen 9 bei der Auskoppelfläche 16 ausgekoppelt. Der Anteil der eingekoppelten Lichtemission, welcher durch den Abschnitt 24 um das Maskierelement 25 herum geleitet wird, wird durch den zweiten Bereich 11 der Auskoppelstrukturen 9 mit einer anderen Abstrahlcharakteristik bei der Auskoppelfläche 16 ausgekoppelt.

### Bezugszeichenliste

- 1: Fahrzeug
- 2: Innenraum des Fahrzeugs
- 3: Fahrzeugleuchte
- 4: Lichtquelle
- 5: Lichtquelle
- 6: erste Lichteinkoppelfläche
- 7: zweite Lichteinkoppelfläche
- 8: Lichtleitkörper
- 9: Lichtauskoppelstrukturen
- 10: erster Bereich
- 11: zweiter Bereich
- 12: Fläche
- 13: Fläche
- 14: Lichtweg
- 15: Lichtweg
- 16: Auskoppelfläche
- 17: Winkel
- 18: Winkel
- 19: Winkel
- 20: Verbindungslinie
- 21: erste Platte des Lichtleitkörpers 33
- 22: zweite Platte des Lichtleitkörpers 33
- 23: erster Abschnitt
- 24: zweiter Abschnitt
- 25: Maskierelement
- 27: Auskoppelstrukturen
- 28: Auskoppelfläche
- 29: Lichtquellen
- 30: Reflektor
- 31: optisches Umlenkelement
- 32: Lichteinkoppelfläche
- 33: Lichtleitkörper

## Patentansprüche

1. Fahrzeugleuchte (3) zur Beleuchtung des Innenraums (2) des Fahrzeugs (1), mit
- zumindest einer Lichtquelle (29; 4, 5),
- einem Lichtleitkörper (33), der eine Lichteinkoppelfläche (32; 6, 7) aufweist, in welche die Lichtemission der Lichtquelle (29; 4, 5) eingekoppelt wird und
- einem flächigen Maskierelement (25), dessen eine Seite in Richtung des Innenraums (2) des Fahrzeugs (1) ausgerichtet ist und dessen andere Seite in die entgegengesetzte Richtung ausgerichtet ist, wobei die Lichtquelle (29; 4, 5) bei der dem Innenraum (2) des Fahrzeugs (1) abgewandten Seite des Maskierelements (25) angeordnet ist und wobei der Lichtleitkörper (33) sich um das Maskierelement (25) herum erstreckt, sodass die Lichtemission der Lichtquelle (29; 4, 5) von der dem Innenraum (2) des Fahrzeugs (1) abgewandten Seite zu der dem Innenraum (2) des Fahrzeugs (1) zugewandten Seite geleitet wird und dort ausgekoppelt wird, wobei
- ein erster Teil der Lichtemission der zumindest einen Lichtquelle (29; 4, 5) zu der dem Innenraum (2) des Fahrzeugs (1) zugewandten Seite des Lichtleitkörpers (33) von einer ersten Seite her gelangt und ein zweiter Teil der Lichtemission der zumindest einen Lichtquelle (29; 4, 5) zu der dem Innenraum (2) des Fahrzeugs (1) zugewandten Seite des Lichtleitkörpers (33) von einer der ersten Seite gegenüberliegenden zweiten Seite her gelangt
**dadurch gekennzeichnet, dass**
- der Lichtleitkörper (33) auf der dem Innenraum (2) des Fahrzeugs (1) zugewandten Seite eine Vielzahl von Lichtauskoppelstrukturen (27; 9) aufweist, wobei jede Lichtauskoppelstruktur (27; 9) einen ersten Bereich (10) aufweist, auf den der erste Teil der Lichtemission trifft, und einen zweiten Bereich (11) aufweist, auf den der zweite Teil der Lichtemission trifft, und
- die mittels des ersten Bereichs (10) erzeugte Lichtauskoppelung eine andere Abstrahlcharakteristik aufweist, als die mittels des zweiten Bereichs (11) erzeugte Lichtauskoppelung.

2. Fahrzeugleuchte (3) nach Anspruch 1,
**dadurch gekennzeichnet,**
**dass** die Lichtauskoppelstrukturen (27; 9) eine flächige Lichtauskoppelung der Lichtemission der Lichtquelle (29; 4, 5) bereitstellen.

3. Fahrzeugleuchte nach Anspruch 1,
**dadurch gekennzeichnet,**
**dass** durch die Lichtauskoppelstrukturen (27; 9) eine diffuse Lichtemission bereitgestellt wird.

4. Fahrzeugleuchte (3) nach einem der vorhergehenden Ansprüche,
**dadurch gekennzeichnet,**
**dass** das Maskierelement (25) von zumindest zwei Seiten von dem Lichtleitkörper (33) umschlossen ist.

5. Fahrzeugleuchte (3) nach Anspruch 4,
**dadurch gekennzeichnet,**
**dass** auf der dem Innenraum (2) des Fahrzeugs (1) abgewandten Seite ein optisches Umlenkelement (31) vorgesehen ist, welches die Lichtemission der Lichtquelle (29) so aufteilt, dass sie zu der dem Innenraum (2) des Fahrzeugs (1) zugewandten Seite des Lichtleitkörpers (33) von zwei gegenüberliegenden Seiten gelangt.

6. Fahrzeugleuchte (3) nach einem der vorhergehenden Ansprüche,
**dadurch gekennzeichnet,**
**dass** die Fahrzeugleuchte (3) zumindest zwei Lichtquellen (4, 5) umfasst, dass die Lichtemission der ersten Lichtquelle (4) zu der dem Innenraum (2) des Fahrzeugs (1) zugewandten Seite des Lichtleitkörpers (33) von der ersten Seite her gelangt und dass die Lichtemission der zweiten Lichtquelle (5) zu der dem Innenraum (2) des Fahrzeugs (1) zugewandten Seite des Lichtleitkörpers (33) von der zweiten Seite her gelangt.

7. Fahrzeugleuchte (3) nach einem der vorhergehenden Ansprüche,
**dadurch gekennzeichnet,**
**dass** die Lichteinkoppelfläche (33) durch eine Rinne in dem Lichtleitkörper (33) auf der dem Innenraum (2) des Fahrzeugs (1) abgewandten Seite gebildet ist.

8. Fahrzeugleuchte (3) nach einem der vorhergehenden Ansprüche,
**dadurch gekennzeichnet,**
**dass** der Lichtleitkörper (33) aus zwei aneinander gefügten Platten (21, 22) gebildet ist.

9. Fahrzeug (1) mit einer Fahrzeugleuchte (3) nach einem der vorhergehenden Ansprüche, **dadurch gekennzeichnet,**
**dass** von der Fahrzeugleuchte (3) eine Decken- oder Himmelbeleuchtung bereitgestellt wird.

## Claims

1. Vehicle luminaire (3) for illuminating the interior (2) of the vehicle (1), comprising
- at least one light source (29; 4, 5),
- a light guiding body (33) having a light input coupling surface (32; 6, 7), into which the light emission of the light source (29; 4, 5) is coupled, and
- a planar masking element (25), one side of which is oriented in the direction of the interior (2) of the vehicle (1) and the other side of which is oriented in the opposite direction, wherein the light source (29; 4, 5) is arranged at that side of the masking element (25) which faces away from the interior (2) of the vehicle (1), and wherein the light guiding body (33) extends around the masking element (25), such that the light emission of the light source (29; 4, 5) is guided from the side facing away from the interior (2) of the vehicle (1) to the side facing the interior (2) of the vehicle (1) and is coupled out there,
wherein
- a first part of the light emission of the at least one light source (29; 4, 5) passes to that side of the light guiding body (33) which faces the interior (2) of the vehicle (1) from a first side and a second part of the light emission of the at least one light source (29; 4, 5) passes to that side of the light guiding body (33) which faces the interior (2) of the vehicle (1) from a second side situated opposite the first side, **characterized in that**
- the light guiding body (33) has a multiplicity of light output coupling structures (27; 9) on the side facing the interior (2) of the vehicle (1), wherein each light output coupling structure (27; 9) has a first region (10), on which the first part of the light emission impinges, and a second region (11), on which the second part of the light emission impinges, and
- the light output coupling generated by means of the first region (10) has a different emission characteristic from the light output coupling generated by means of the second region (11).

2. Vehicle luminaire (3) according to Claim 1, **characterized**
**in that** that light output coupling structures (27; 9) provide a planar light output coupling of the light emission of the light source (29; 4, 5).

3. Vehicle luminaire according to Claim 1, **characterized**
**in that** a diffuse light emission is provided by the light output coupling structures (27; 9).

4. Vehicle luminaire (3) according to any of the preceding claims,
**characterized**
**in that** the masking element (25) is enclosed by the light guiding body (33) from at least two sides.

5. Vehicle luminaire (3) according to Claim 4, **characterized**
**in that** an optical deflection element (31) is provided on the side facing away from the interior (2) of the vehicle (1) and splits the light emission of the light source (29) such that it passes to that side of the light guiding body (33) which faces the interior (2) of the vehicle (1) from two opposite sides.

6. Vehicle luminaire (3) according to any of the preceding claims,
**characterized**
**in that** the vehicle luminaire (3) comprises at least two light sources (4, 5), in that the light emission of the first light source (4) passes to that side of the light guiding body (33) which faces the interior (2) of the vehicle (1) from the first side, and in that the light emission of the second light source (5) passes to that side of the light guiding body (33) which faces the interior (2) of the vehicle (1) from the second side.

7. Vehicle luminaire (3) according to any of the preceding claims,
**characterized**
**in that** the light input coupling surface (33) is formed by a groove in the light guiding body (33) on the side facing away from the interior (2) of the vehicle (1).

8. Vehicle luminaire (3) according to any of the preceding claims,
**characterized**
**in that** the light guiding body (33) is formed from two plates (21, 22) joined to one another.

9. Vehicle (1) comprising a vehicle luminaire (3) according to any of the preceding claims,
**characterized**
**in that** a ceiling or headliner lighting is provided by the vehicle luminaire (3).

## Revendications

1. Lampe pour véhicule (3) destinée à éclairer l'habitacle (2) du véhicule (1), comprenant
- au moins une source de lumière (29 ; 4, 5),
- un corps de guidage de lumière (33) comportant une surface d'injection de lumière (32 ; 6, 7), dans laquelle est injectée l'émission de lumière de la source de lumière (29 ; 4, 5), et
- un élément de masquage plan (25) dont un côté est orienté en direction de l'habitacle (2) du véhicule (1) et dont l'autre côté est orienté dans la direction opposée, dans laquelle la source de lumière (29 ; 4, 5) est disposée du côté de l'élément de masquage (25) qui est tourné à l'opposé de l'habitacle (2) du véhicule (1) et dans laquelle le corps de guidage de lumière (33) s'étend tout autour de l'élément de masquage (25), de sorte que l'émission de lumière de la source de lumière (29 ; 4, 5) est guidée depuis le côté qui est tourné à l'opposé de l'habitacle (2) du véhicule (1) vers le côté qui est tourné vers l'habitacle (2) du véhicule (1) et y est extraite,
dans laquelle
- une première partie de l'émission lumineuse de ladite au moins une source de lumière (29 ; 4, 5) atteint le côté du corps de guidage de lumière (33) qui est tourné vers l'habitacle (2) du véhicule (1) depuis un premier côté, et une deuxième partie de l'émission lumineuse de ladite au moins une source de lumière (29 ; 4, 5) atteint le côté du corps de guidage de lumière (33) qui est tourné vers l'habitacle (2) du véhicule (1) depuis un deuxième côté opposé au premier côté, **caractérisée en ce que**
- le corps du guidage de lumière (33) comporte une pluralité de structures d'extraction de lumière (27 ; 9) sur le côté qui est tourné vers l'habitacle (2) du véhicule (1), dans laquelle chaque structure d'extraction de lumière (27 ; 9) comporte une première zone (10) sur laquelle est incidente la première partie de l'émission lumineuse et une deuxième zone (11) sur laquelle est incidente la deuxième partie de l'émission lumineuse, et
- l'extraction de lumière générée au moyen de la première zone (10) présente une caractéristique de rayonnement différente de celle de l'extraction de lumière générée au moyen de la deuxième zone (11).

2. Lampe pour véhicule (3) selon la revendication 1, **caractérisée en ce que** les structures d'extraction de lumière (27 ; 9) assurent une extraction de lumière plane de l'émission lumineuse de la source de lumière (29 ; 4, 5) .

3. Lampe pour véhicule selon la revendication 1, **caractérisée en ce qu'**une émission lumineuse diffuse est assurée par les structures d'extraction de lumière (27 ; 9) .

4. Lampe pour véhicule (3) selon l'une des revendications précédentes,
**caractérisée en ce que** l'élément de masquage (25) est entouré par le corps de guidage de lumière (33) sur au moins deux côtés.

5. Lampe pour véhicule (3) selon la revendication 4, **caractérisée en ce qu'**il est prévu sur le côté qui est tourné à l'opposé de l'habitacle (2) du véhicule (1) un élément de déviation optique (31) qui divise l'émission lumineuse de la source de lumière (29) de sorte qu'elle atteigne le côté du corps de guidage de lumière (33) qui est tourné vers l'habitacle (2) du véhicule (1) depuis deux côtés opposés.

6. Lampe pour véhicule (3) selon l'une des revendications précédentes,
**caractérisée en ce que** la lampe pour véhicule (3) comprend au moins deux sources de lumière (4, 5), **en ce que** l'émission lumineuse de la première source de lumière (4) atteint le côté du corps de guidage de lumière (33) qui est tourné vers l'habitacle (2) du véhicule (1) depuis le premier côté, et **en ce que** l'émission lumineuse de la deuxième source de lumière (5) atteint le côté du corps de guidage de lumière (33) qui est tourné vers l'habitacle (2) du véhicule (1) depuis le deuxième côté.

7. Lampe pour véhicule (3) selon l'une des revendications précédentes,
**caractérisée en ce que** la surface d'injection de lumière (33) est formée par une rainure ménagée dans le corps de guidage de lumière (33) sur le côté qui est tourné à l'opposé de l'habitacle (2) du véhicule (1).

8. Lampe pour véhicule (3) selon l'une des revendications précédentes,
**caractérisée en ce que** le corps de guidage de lumière (33) est formé par deux plaques (21, 22) réunies.

9. Véhicule (1) comprenant une lampe pour véhicule (3) selon l'une des revendications précédentes,
**caractérisé en ce que** l'éclairage de plafond ou de ciel est assuré par la lampe pour véhicule (3).
